# EUROPEAN PATENT SPECIFICATION

(11) **EP 4 582 319 B1**
(45) Date of publication and mention of the grant of the patent: **11.11.2026**
(21) Application number: 22959876.8
(22) Date of filing: 27.09.2022
(51) Int. Cl.: B60T 8/58, B60L 7/18, B60T 1/10, B60T 7/12, B60T 7/22, F16D 61/00

(54) **BRAKE CONTROL METHOD AND RELATED DEVICE**
BREMSSTEUERUNGSVERFAHREN UND ZUGEHÖRIGE VORRICHTUNG
PROCÉDÉ DE COMMANDE DE FREIN ET DISPOSITIF ASSOCIÉ

(43) Date of publication of application: 09.07.2025
(73) Proprietor: Yinwang Intelligent Technologies Co., Ltd., Shenzhen, Guangdong 518110 (CN)
(72) Inventor: LV, Shangwei, Shenzhen, Guangdong 518129 (CN); QU, Linghu, Shenzhen, Guangdong 518129 (CN); MA, Wentao, Shenzhen, Guangdong 518129 (CN)
(74) Representative: Maiwald GmbH
(86) International application number: PCT/CN2022/121912
(87) International publication number: WO 2024/065227

(56) References cited:
- CN-A- 107 848 424
- CN-A- 109 624 947
- CN-A- 111 601 731
- CN-A- 114 981 135
- CN-A- 115 003 573
- JP-A- 2005 348 497
- JP-B2- 4 687 689
- US-A1- 2009 118 887
- US-A1- 2016 039 292
- US-A1- 2018 272 872
- US-B2- 9 180 780

## Description

### TECHNICAL FIELD

This application relates to the field of intelligent vehicles, and specifically, to a braking control method and a related apparatus.

### BACKGROUND

In a scenario in which a user or an intelligent driving system performs vehicle braking, a vehicle may usually experience "nod/jerking". Especially when the vehicle is about to stop due to braking, the vehicle may experience more obvious jerking. Usually, a powertrain or a suspension system of the vehicle is optimized, to alleviate "nod/jerking". However, "nod/jerking" cannot be completely avoided.

Even if the vehicle is in an intelligent driving mode in a driving process of the vehicle to further avoid "nod/jerking" in a braking process of the vehicle and achieve comfort braking effect, it is difficult to avoid "nod/jerking" in the braking process of the vehicle when the vehicle is about to stop due to a low speed or braking. Examples of braking control methods are described in e.g., US 2016/039292 A1, JP 4 687689 B2, US 9 180 780 B2, and US 2009/118887 A1.

Therefore, how to avoid "nod/jerking" in a braking process of a vehicle by using an appropriate braking control method to implement comfort braking is an urgent problem to be resolved.

### SUMMARY

Embodiments of this application provide a braking control method and a related apparatus, to implement comfort braking, and avoid nod/jerking caused by braking. The braking control method provided in embodiments of this application is used for a vehicle to perform braking, and comfort braking is completed in a manner of energy regeneration in cooperation with a vehicle braking system, to improve comfortability of a braking process while avoiding a collision risk and not additionally increasing a braking distance.

According to a first aspect, a braking control method is provided. The method includes: obtaining a vehicle speed and a required braking force of a vehicle;
determining a target braking force based on the vehicle speed and the required braking force, where at a first moment to a second moment, the target braking force first changes to a first threshold and then changes to a second threshold, the first threshold is greater than the required braking force, and the second threshold is less than the required braking force; the first moment is a moment at which the vehicle speed is equal to a first speed; and the second moment is a moment at which the vehicle speed is equal to a second speed; and determining a first execution braking force and a second execution braking force based on the target braking force, where the first execution braking force is provided through energy regeneration, and the second execution braking force is provided by a braking system.

For example, the required braking force may be obtained based on an input of a user, or the required braking force may be obtained based on an intelligent driving system (for example, an automatic driving system or a driving assistance system).

The user may be a driver of the vehicle, or may be a passenger of the vehicle, or may be an authorized passenger in the vehicle. The authorized passenger has permission to indicate the vehicle to perform braking. In addition, the braking force may be braking torque, an acceleration, or the like in a broad sense.

For example, the first threshold may be positively correlated with the required braking force. The first threshold may also be positively correlated with the vehicle speed.

For example, an expected braking distance may be further determined based on the vehicle speed, the required braking force, and a preset comfort braking time. When there is an obstacle ahead of the vehicle, and the determined braking distance is greater than a current distance between the vehicle and the obstacle, the required braking force needs to be determined based on the distance between the vehicle and the obstacle and the vehicle speed, to re-determine the target braking force or a change trend of the target braking force. For example, the second speed may be equal to 0, or may be another speed, for example, may be another speed close to 0, for example, 5 km/h.

For example, there is a moment between the first moment and the second moment. At the moment, the target braking force is equal to the required braking force. After the moment, the target braking force gradually decreases to the second threshold.

For example, the action of determining the target braking force based on the vehicle speed and the required braking force is performed at any time. Based on the current target braking force, a target braking force at a subsequent moment may be further determined, and further, a basic change trend of the target braking force may be determined.

For example, braking of the vehicle is classified into common braking and comfort braking. The common braking is prone to "nod/jerking" in a braking process of the vehicle, and the comfort braking is braking performed by using the braking control method provided in this embodiment of this application.

Based on the foregoing technical solution, in a process in which the target braking force first increases and then decreases, a force that is generated by a vehicle suspension in a deceleration process and that can cause a nod/jerking of the vehicle can be gradually consumed, thereby effectively alleviating nod/jerking of the vehicle in the braking process. In addition, because the target braking force first increases and then decreases, a corresponding value of a vehicle braking deceleration is also first increased and then decreased. It can be learned from the change trend that, compared with a common braking manner in which a deceleration change is small, this solution can implement comfort braking without increasing the braking distance. In addition, an extra braking force is provided through energy regeneration, to share working load that is based on the braking system, thereby ensuring comfort braking.

With reference to the first aspect, in some implementations of the first aspect, after the second moment, the target braking force changes to a third threshold, and the third threshold is a braking force required for keeping the vehicle stationary.

For example, compared with the third threshold, the third threshold may be greater than the third threshold, or may be greater than 0 and less than the third threshold, provided that it is ensured that the vehicle can keep in a parking state based on the third threshold.

Based on the foregoing technical solution, when the vehicle is stationary or tends to be stationary, the vehicle can implement an automatic parking function based on a corresponding braking force of the vehicle, to avoid "slipping" of the vehicle or the like. In addition, power consumption is reduced, and wear and tear of a vehicle component, for example, wear and tear of a motor, may also be reduced.

With reference to the first aspect, in some implementations of the first aspect, the vehicle is controlled, based on the method, to perform parking braking.

For example, the foregoing method may be performed by using the braking system of the vehicle, to perform the foregoing parking braking process.

With reference to the first aspect, in some implementations of the first aspect, a sum of the first execution braking force and the second execution braking force is equal to the target braking force.

With reference to the first aspect, in some implementations of the first aspect, before the first moment, or when the vehicle speed is greater than or equal to the first vehicle speed, the second execution braking force is configured to be 0, and the first execution braking force is configured to be equal to the target braking force.

With reference to the first aspect, in some implementations of the first aspect, when the vehicle speed is less than or equal to the second vehicle speed, or when the vehicle is incapable of performing energy regeneration braking, the first execution braking force is configured to be 0, and the second execution braking force is configured to be equal to the target braking force.

For example, the first vehicle speed may be a condition for braking through energy regeneration. For example, when the vehicle is at 30 kph, the vehicle can perform braking by using a back-towing braking force generated by an engine. In this case, the braking force provided through energy regeneration is sufficient to meet the target braking force. Therefore, the second execution braking force may be configured to be 0.

Based on the foregoing technical solution, energy regeneration braking is combined with the braking system, and the first execution braking force and the second execution braking force are configured in real time based on the vehicle speed, to ensure comfort braking of the vehicle.

With reference to the first aspect, in some implementations of the first aspect, the target braking force is determined based on information about a correspondence between the vehicle speed, the required braking force, and the target braking force.

Based on the foregoing technical solution, the target braking force is jointly determined based on a plurality of types of data, to ensure that the first execution braking force and the second execution braking force can be appropriately configured subsequently, and further ensure comfort braking of the vehicle.

With reference to the first aspect, in some implementations of the first aspect, the information about the correspondence includes a first dataset, and the first dataset includes preset curve information or preset correspondence table information of the target braking force at the first moment to the second moment.

For example, the preset curve information is a curve of target braking forces that are determined at a plurality of moments during braking of the vehicle, and the preset correspondence table information records a correspondence of the target braking forces that respectively correspond to the plurality of moments during braking of the vehicle.

Based on the foregoing technical solution, the change trend of the target braking force can be more intuitively presented by using the preset curve information or the preset correspondence table information, so that a visualized change trend of a second required braking force is provided for the user.

With reference to the first aspect, in some implementations of the first aspect, it is determined that the vehicle currently meets a first condition. The first condition includes at least one of the following: the vehicle braking deceleration is within a first preset interval, the vehicle speed is lower than a preset speed, the distance between the vehicle and the obstacle is greater than or equal to a preset distance, a pedal stroke of the vehicle is within a second preset interval, or a pedal stroke change rate of the vehicle is within a third preset interval.

For example, a value corresponding to the deceleration mentioned in this embodiment of this application is a scalar value.

For example, in addition to the foregoing information, information included in the first condition may further include the following: a height of a front shaft suspension of the vehicle is lower than a height of a rear shaft suspension of the vehicle, a traffic signal light ahead of the vehicle is a red light, there is a sidewalk ahead of the vehicle, or the like. An active suspension four-wheel height is heights of active suspensions on four wheels from the ground.

For example, the first preset interval, the second preset interval, the third preset interval, the preset distance, and the preset speed may be set for different vehicles and different traveling environments.

Based on the foregoing technical solution, due to particularity of comfort braking, comfort braking can be completed only on a specific premise, to avoid a corresponding safety risk caused by still using comfort braking in an emergency case, and improve safety of comfort braking.

For example, during braking of the vehicle, it is detected that another target object appears ahead of the vehicle. If it is determined that the vehicle currently still meets the first condition, the target braking force is re-determined based on the current vehicle speed and the required braking force.

For example, when another target suddenly appears ahead of the vehicle, or an emergency occurs in a cab, to ensure safety of the user, a passenger, and the another target on the road, a comfort braking operation needs to be stopped, and braking permission is completely handed over to the user. Certainly, even if another target suddenly appears ahead of the vehicle, the vehicle still meets the first condition, which indicates that a current traveling environment is still good. In this case, a comfort braking operation does not need to be stopped, and only the target braking force needs to be re-determined. Based on this technical solution, during comfort braking, if the traveling environment of the vehicle changes, whether the vehicle still meets the first condition is re-determined, and when the vehicle still meets the first condition, the target braking force is re-planned, to avoid a case in which in an emergency during comfort braking, a traffic accident is caused by inability to make emergency avoidance due to comfort braking execution. This further increases safety of comfort braking.

With reference to the first aspect, in some implementations of the first aspect, when a difference between a first braking distance and a second braking distance is greater than a first distance threshold, or when a difference between a third braking distance and the first braking distance is less than a second distance threshold, the vehicle is controlled, based on a second target braking force, to perform braking, where the first braking distance is obtained through calculation based on target braking torque and the vehicle speed, the second braking distance is obtained through calculation based on the required braking force and the vehicle speed, and the third braking distance is the distance between the vehicle and the obstacle.

For example, when the difference between the first braking distance and the second braking distance is greater than the first distance threshold, or when the difference between the third braking distance and the first braking distance is less than the second distance threshold, it may be collectively referred to as that the vehicle is in an under-braking state.

For example, the second target braking force is a target braking force that is re-determined based on the current traveling environment of the vehicle, for example, the current vehicle speed and the required braking force, and with reference to the first distance threshold or the second distance threshold. Because the previously determined target braking force makes the vehicle in the under-braking state, the second target braking force is greater than the target braking force.

Based on the foregoing technical solution, a case in which the vehicle is under-braking can be effectively avoided, the braking distance is reduced, and a risk of collision with an obstacle ahead of the vehicle can also be effectively reduced, thereby ensuring driving safety of the user of the vehicle.

With reference to the first aspect, in some implementations of the first aspect, the braking system includes a hydraulic braking system, an electrical parking braking EPB system, and an electro-mechanical braking EMB system.

Based on the foregoing technical solution, the method can be applied to a plurality of braking systems, and has strong applicability and compatibility.

According to a second aspect, a braking control apparatus is provided. The apparatus includes: an obtaining unit, configured to obtain a vehicle speed and a required braking force of a vehicle; and a determining unit, configured to: determine a target braking force based on the vehicle speed and the required braking force, where at a first moment to a second moment, the target braking force first changes to a first threshold and then changes to a second threshold, the first threshold is greater than the required braking force, and the second threshold is less than the required braking force; the first moment is a moment at which the vehicle speed is equal to a first speed; and the second moment is a moment at which the vehicle speed is equal to a second speed; and determine a first execution braking force and a second execution braking force based on the target braking force, where the first execution braking force is provided through energy regeneration, and the second execution braking force is provided by a braking system.

Based on the foregoing technical solution, in a process in which the target braking force first increases and then decreases, a force that is generated by a vehicle suspension in a deceleration process and that can cause a nod/jerking of the vehicle can be gradually consumed, thereby effectively alleviating nod/jerking of the vehicle in a braking process. In addition, because the target braking force first increases and then decreases, a corresponding value of a vehicle braking deceleration is also first increased and then decreased. It can be learned from the change trend that, compared with a common braking manner in which a deceleration change is small, this solution can implement comfort braking without increasing a braking distance. In addition, an extra braking force is provided through energy regeneration, to share working load that is based on the braking system, thereby ensuring comfort braking.

With reference to the second aspect, in some implementations of the second aspect, after the second moment, the target braking force changes to a third threshold, and the third threshold is a braking force required for keeping the vehicle stationary.

For example, compared with the third threshold, the third threshold may be greater than the third threshold, or may be greater than 0 and less than the third threshold, provided that it is ensured that the vehicle can keep in a parking state based on the third threshold.

Based on the foregoing technical solution, when the vehicle is stationary or tends to be stationary, the vehicle can implement an automatic parking function based on a corresponding braking force of the vehicle, to avoid "slipping" of the vehicle or the like. In addition, power consumption is reduced, and wear and tear of a vehicle component, for example, wear and tear of a motor, may also be reduced.

With reference to the second aspect, in some implementations of the second aspect, the apparatus further includes a control unit, configured to control the vehicle to perform parking braking.

With reference to the second aspect, in some implementations of the second aspect, a sum of the first execution braking force and the second execution braking force is equal to the target braking force.

With reference to the second aspect, in some implementations of the second aspect, before the first moment or when the vehicle speed is greater than or equal to the first vehicle speed, the second execution braking force is configured to be 0, and the first execution braking force is configured to be equal to the target braking force.

With reference to the second aspect, in some implementations of the second aspect, when the vehicle speed is less than or equal to the second vehicle speed, or when the vehicle is incapable of performing energy regeneration braking, the first execution braking force is configured to be 0, and the second execution braking force is configured to be equal to the target braking force.

Based on the foregoing technical solution, energy regeneration braking is combined with the braking system, and the first execution braking force and the second execution braking force are configured in real time based on the vehicle speed, to ensure comfort braking of the vehicle.

With reference to the second aspect, in some implementations of the second aspect, the determining unit is specifically configured to determine the target braking force based on information about a correspondence between the vehicle speed, the required braking force, and the target braking force.

Based on the foregoing technical solution, the determining unit jointly determines the target braking force based on a plurality of types of data, to ensure that the first execution braking force and the second execution braking force can be appropriately configured subsequently, and further ensure comfort braking of the vehicle.

With reference to the second aspect, in some implementations of the second aspect, the information about the correspondence includes a first dataset, and the first dataset includes preset curve information or preset correspondence table information of the target braking force at the first moment to the second moment.

Based on the foregoing technical solution, the change trend of the target braking force can be more intuitively presented by using the preset curve information or the preset correspondence table information, so that a visualized change trend of a second required braking force is provided for a user.

With reference to the second aspect, in some implementations of the second aspect, the determining unit is further configured to: determine that the vehicle currently meets a first condition, where the first condition includes at least one of the following: the vehicle braking deceleration is within a first preset interval, the vehicle speed is lower than a preset speed, a distance between the vehicle and an obstacle is greater than or equal to a preset distance, a pedal stroke of the vehicle is within a second preset interval, or a pedal stroke change rate of the vehicle is within a third preset interval.

Based on the foregoing technical solution, due to particularity of comfort braking, comfort braking can be completed only on a specific premise, to avoid a corresponding safety risk caused by still using comfort braking in an emergency case, and improve safety of comfort braking.

With reference to the second aspect, in some implementations of the second aspect, the control unit is further configured to: when a difference between a first braking distance and a second braking distance is greater than a first distance threshold, or when a difference between a third braking distance and the first braking distance is less than a second distance threshold, control, based on a second target braking force, the vehicle to perform braking, where the first braking distance is obtained through calculation based on target braking torque and the vehicle speed, the second braking distance is obtained through calculation based on the required braking force and the vehicle speed, and the third braking distance is the distance between the vehicle and the obstacle.

Based on the foregoing technical solution, a case in which the vehicle is under-braking can be effectively avoided, the braking distance is reduced, and a risk of collision with an obstacle ahead of the vehicle can also be effectively reduced, thereby ensuring driving safety of the user of the vehicle.

With reference to the second aspect, in some implementations of the second aspect, the braking system includes a hydraulic braking system, an electrical parking braking EPB system, and an electro-mechanical braking EMB system.

Based on the foregoing technical solution, the method can be applied to a plurality of braking systems, and has strong applicability and compatibility.

According to a third aspect, a braking control apparatus is provided, including a processor and a memory. The processor is connected to the memory, the memory is configured to store program code, and the processor is configured to invoke the program code to perform the method in any possible implementation of the method design of the first aspect.

According to a fourth aspect, a chip system is provided. The chip system is used in an electronic device. The chip system includes one or more interface circuits and one or more processors. The interface circuit and the processor are interconnected through a line. The interface circuit is configured to receive a signal from a memory of the electronic device and send the signal to the processor. The signal includes computer instructions stored in the memory. When the processor executes the computer instructions, the electronic device performs the method in any possible implementation of the method design of the first aspect.

According to a fifth aspect, a computer-readable storage medium is provided, and stores a computer program or instructions. The computer program or the instructions are used to implement the method in any possible implementation of the method design of the first aspect.

According to a sixth aspect, a computer program product is provided. When computer program code or instructions are executed on a computer, the computer is enabled to perform the method in any possible implementation of the method design in the first aspect.

According to a seventh aspect, an embodiment of this application provides an integrated booster. The integrated booster includes a pedal stroke sensor, a braking main cylinder, a motor, a push rod mechanism, and the performed method in any possible implementation of the method design in the first aspect.

According to an eighth aspect, an embodiment of this application provides a braking system. The braking system includes a braking pedal, a braking actuator, a braking fluid pipe, and the integrated booster according to the seventh aspect.

According to a ninth aspect, an embodiment of this application provides a vehicle. The vehicle includes the braking control apparatus according to any one of the possible implementations of the second aspect or the third aspect, the integrated booster according to any one of the possible implementations of the seventh aspect, or the braking system according to any one of the possible implementations of the eighth aspect.

### BRIEF DESCRIPTION OF DRAWINGS

FIG. 1 is a diagram of an electro-hydraulic braking system according to an embodiment of this application;
FIG. 2 is a schematic flowchart of a braking control method according to an embodiment of this application;
FIG. 3(a) to FIG. 3(c) are a diagram of a parameter change trend of a braking control method according to an embodiment of this application;
FIG. 4 is a schematic flowchart of another braking control method according to an embodiment of this application;
FIG. 5 is a diagram of a structure of a braking control apparatus 500 according to an embodiment of this application;
FIG. 6 is a block diagram of a braking control apparatus 600 according to an embodiment of this application; and
FIG. 7 is a diagram of a structure of a braking control apparatus 700 according to an embodiment of this application.

### DESCRIPTION OF EMBODIMENTS

The following describes technical solutions of embodiments in this application with reference to accompanying drawings.

A moving carrier in this application may include a road transportation means, a water transportation means, an air transportation means, an industrial device, an agricultural device, an entertainment device, or the like. For example, the moving carrier may be a vehicle. The vehicle is a vehicle in a broad sense, and may be a transportation means (such as a commercial vehicle, a passenger vehicle, a motorcycle, a flight vehicle, or a train), an industrial vehicle (such as a pallet truck, a trailer, or a tractor), an engineering vehicle (such as an excavator, a bulldozer, or a crane), an agricultural device (such as a lawn mower or a harvester), a recreation device, a toy vehicle, or the like. A type of the vehicle is not specifically limited in embodiments of this application. For another example, the moving carrier may be a transportation means such as an airplane or a ship.

For ease of understanding, an ordinary vehicle is used as an example in embodiments of this application to correspondingly describe embodiments of this application.

A braking system is one of core control systems of a vehicle. The braking system is used to implement longitudinal control of the vehicle, so that the vehicle can decelerate or maintain a specific speed.

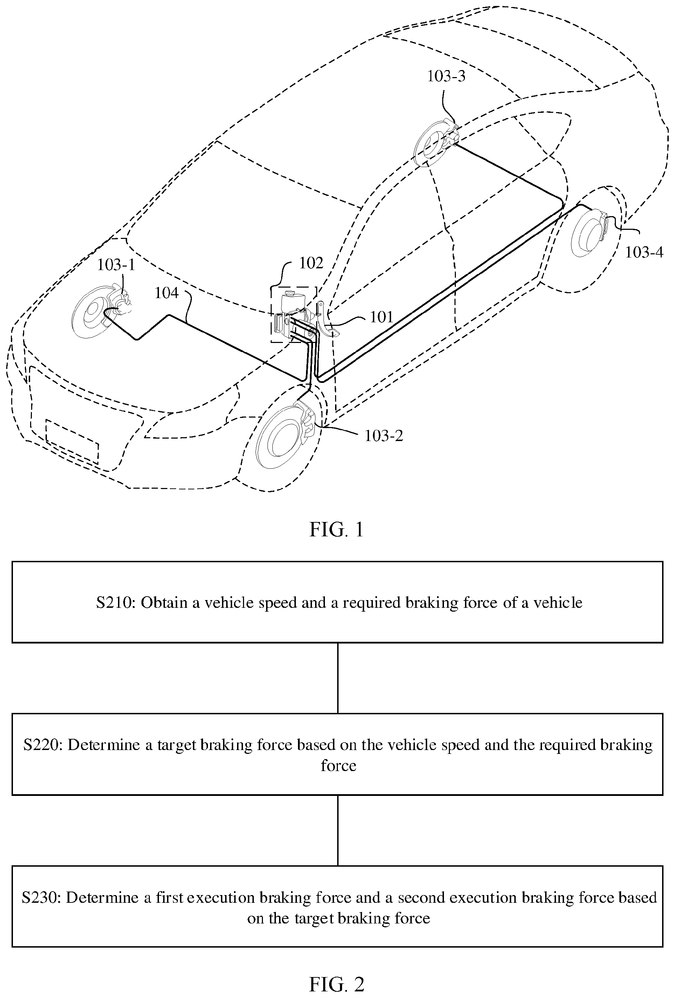

FIG. 1 is a diagram of an electro-hydraulic braking (electro-hydraulic braking, EHB) system.

The braking system includes: a braking pedal 101, an integrated booster 102, braking actuators (103-1, 103-2, 103-3, and 103-4), and a braking fluid pipe 104.

The integrated booster 102 is a core component of the braking system, and is integrated with an electronic control unit (electronic control unit, ECU), a pedal stroke sensor, a braking main cylinder, a motor, a push rod mechanism, and the like. The braking pedal 101 is rigidly connected to the integrated booster 102 through the push rod mechanism, and the integrated booster 102 is connected, through the braking fluid pipe 104, to the braking actuators (103-1, 103-2, 103-3, and 103-4) mounted on a wheel side.

In a braking implementation process, a user steps on the braking pedal 101, the push rod mechanism of the integrated booster 102 generates displacement, the pedal stroke sensor detects the displacement of the push rod mechanism, and sends a displacement signal to the ECU, the ECU calculates torque that should be generated by the motor, and then a transmission mechanism of the motor converts the torque into a braking force. The braking force and a push rod force that is generated by the braking pedal 101 by using the push rod mechanism act together on the braking main cylinder, and are jointly converted into hydraulic pressure in the braking main cylinder. Braking fluid with the hydraulic pressure acts on the braking actuators (103-1, 103-2, 103-3, and 103-4) through the braking fluid pipe 104, to implement braking.

However, when vehicle braking is performed based on the foregoing EHB system, it is difficult to avoid "nod/jerking" in a braking process of the vehicle. To implement comfort braking of the vehicle, the user usually deliberately reduces braking pressure, but a braking distance is inevitably increased, and even a collision risk of the vehicle is caused.

In view of this, embodiments of this application provide a braking control method. Comfort braking is completed in a manner of combining energy regeneration and a braking system, to improve comfortability of a braking process and avoid "nod/jerking" of the vehicle in the braking process while avoiding a collision risk and not additionally increasing a braking distance.

FIG. 2 is a schematic flowchart of a braking control method according to an embodiment of this application.

S210: Obtain a vehicle speed and a required braking force of a vehicle.

In some possible embodiments, the required braking force is obtained based on an input of a user, or the required braking force is obtained based on an intelligent driving system (for example, an automatic driving system or a driving assistance system).

In some possible embodiments, the user may be a driver of the vehicle, may be a passenger of the vehicle, or may be an authorized passenger in the vehicle. The authorized passenger has permission to indicate the vehicle to perform braking. The braking force may be braking torque, an acceleration, or the like in a broad sense.

In some possible embodiments, the action of determining a target braking force based on the vehicle speed and the required braking force may be performed at any time. Based on the current target braking force, a target braking force at a subsequent moment may be further determined, and further, a basic change trend of the target braking force may be determined.

In some possible embodiments, an expected braking distance may be further determined based on the vehicle speed, the required braking force, and a preset comfort braking time. When there is an obstacle ahead of the vehicle, and the determined braking distance is greater than a current distance between the vehicle and the obstacle, the required braking force needs to be determined based on the distance between the vehicle and the obstacle and the vehicle speed, to re-determine the target braking force or the change trend of the target braking force.

In some possible embodiments, braking of the vehicle is classified into common braking and comfort braking. The common braking is prone to "nod/jerking" in a braking process of the vehicle, and the comfort braking is braking performed by using the braking control method provided in this embodiment of this application.

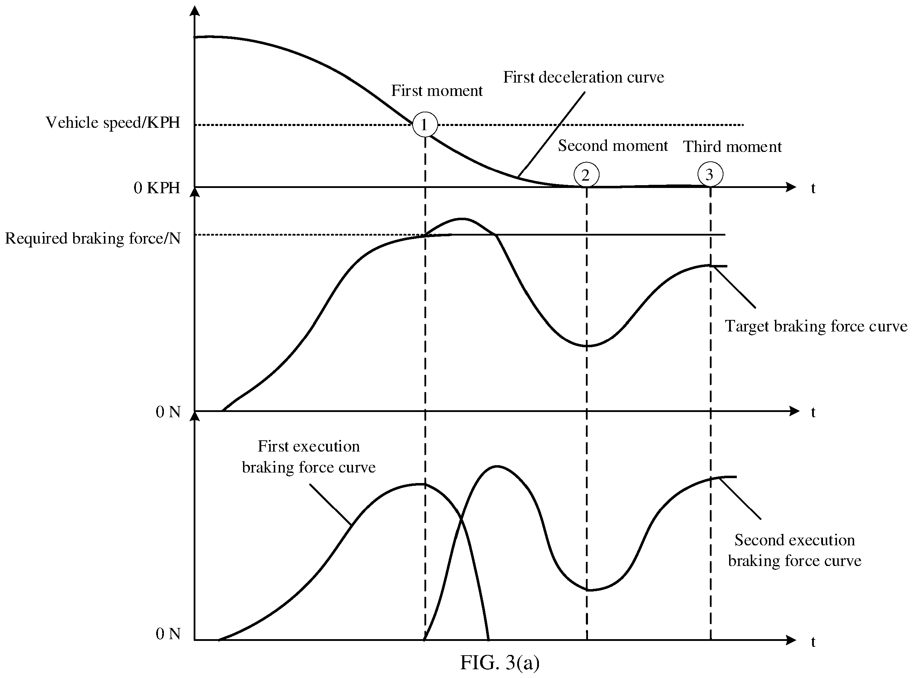

FIG. 3(a) to FIG. 3(c) are a diagram of a parameter change trend of the braking control method according to an embodiment of this application.

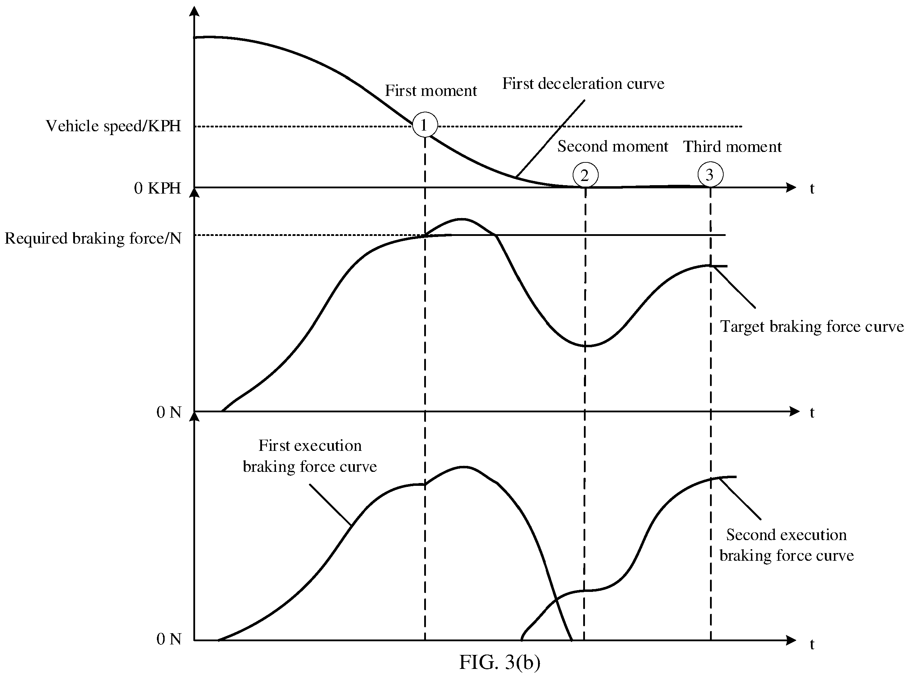

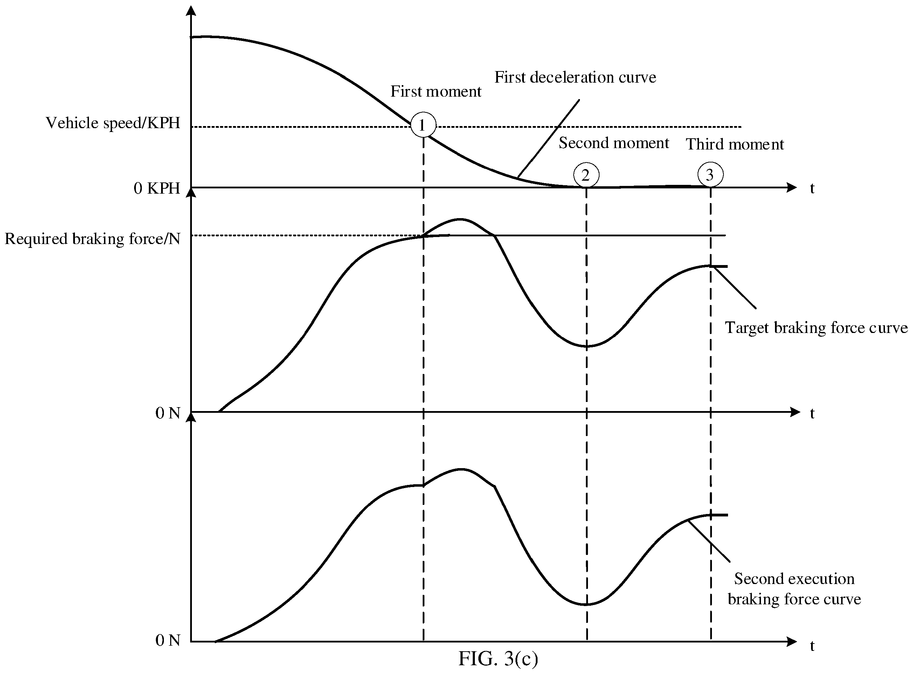

For ease of description, in this embodiment of this application, a change trend of each parameter in a braking process of the vehicle is presented in a form of curve. Four representative moments are marked on a first deceleration curve in each of FIG. 3(a), FIG. 3(b), and FIG. 3(c): a first moment, a second moment, and a third moment. The first moment is a moment at which the vehicle starts to start comfort braking, the second moment is a moment in a comfort braking process of the vehicle, and the third moment is a moment after comfort braking of the vehicle stops. The first deceleration curve is determined during braking of the vehicle. The first deceleration curve is calculated from the first moment shown in FIG. 3(a) to FIG. 3(c). Because the first deceleration curve conforms to a basic curve trend of comfort braking, the following is a general curve trend of the first deceleration curve that conforms to a comfort braking requirement:
As shown in FIG. 3(a), FIG. 3(b), and FIG. 3(c), the trend of the first deceleration curve is as follows:
Between the first moment and the second moment, a deceleration of the vehicle is first large, and then gradually decreases and tends to be smooth.

Between the second moment and the third moment, because a real-time speed of the vehicle tends to 0 and then is equal to 0, the deceleration of the vehicle also gradually becomes 0, and a real-time speed in the first deceleration curve also tends to 0. It should be understood that when the vehicle meets the foregoing deceleration trend in the braking process, "nod/jerking" can be effectively avoided in the vehicle. However, the user usually cannot accurately grasp a braking force input by using a pedal. However, in the technical solution provided in this embodiment of this application, braking forces at a plurality of moments can be adjusted, to implement comfort braking of the vehicle. S220: Determine the target braking force based on the vehicle speed and the required braking force.

In some possible embodiments, if the required braking force is used, although the vehicle can complete braking, it is difficult to avoid "nod/jerking" in the braking process of the vehicle. Therefore, in this embodiment of this application, target braking forces at the plurality of moments are determined based on the required braking force and with reference to the vehicle speed and the required braking force, so that "nod/jerking" in the braking process of the vehicle can be avoided.

As shown in FIG. 3(a), FIG. 3(b), and FIG. 3(c), the first moment, the second moment, the third moment, and a deceleration trend in each time period are marked on the first deceleration curve. Based on the trend, preset curve information that is about the target braking force and that corresponds to the first deceleration curve may also be determined. A target braking force curve shown in FIG. 3(a) to FIG. 3(c) can be determined based on the preset curve information, and is specifically a thick line part in FIG. 3(a) to FIG. 3(c). The first moment may be a start time of the change curve of the target braking force, and a change trend of the target braking force that can meet a comfort braking condition is as follows:
At the first moment to the second moment during braking of the vehicle, the target braking force first changes to a first threshold and then changes to a second threshold. The first threshold is greater than the required braking force, the second threshold is less than the required braking force, the first moment is a moment at which the vehicle speed is equal to a first speed, and the second moment is a moment at which the vehicle speed is equal to a second speed.

In some possible embodiments, the second speed may be equal to 0, or may be another speed less than the first speed, for example, may be another speed close to 0, for example, 5 km/h.

In some possible embodiments, the first threshold may be positively correlated with the required braking force. The first threshold may also be positively correlated with the vehicle speed.

In some possible embodiments, there is a moment between the first moment and the second moment. At the moment, the target braking force is equal to the required braking force. After the moment, the target braking force gradually decreases to the second threshold.

In the foregoing process of increasing the target braking force, the target braking force actually corresponds to a part in which the speed rapidly decreases in the first deceleration curve.

In the foregoing process of decreasing the target braking force, the target braking force actually corresponds to a part in which the deceleration trend tends to be smooth in the first deceleration curve. In this process, a force that is generated by a vehicle suspension in a deceleration process and that can cause a nod/jerking of the vehicle can be gradually consumed, thereby effectively alleviating nod/jerking of the vehicle in the braking process. In addition, because the target braking force first increases and then decreases, a corresponding value of the vehicle braking deceleration is also first increased and then decreased. It can be learned from the change trend that, compared with a common braking manner in which a deceleration change is small, this solution can implement comfort braking without increasing the braking distance.

After the second moment during braking of the vehicle, the target braking force changes to a third threshold, and the third threshold is a braking force required for keeping the vehicle stationary.

In some possible embodiments, to keep the vehicle stationary, after the second moment during braking of the vehicle, the target braking force may need to rise back compared with a target braking force at the second moment, or the target braking force may decrease compared with a target braking force at the second moment, or the target braking force may remain unchanged. A change trend of the target braking force after the second moment mainly depends on torque required for ensuring that the vehicle is stationary. However, generally, the braking force for keeping the vehicle stationary is less than the required braking force input by the user. Based on this technical solution, power consumption is reduced, and wear and tear of a vehicle component, for example, wear and tear of a motor, may also be reduced.

In some possible embodiments, the foregoing method may be performed by using a braking system of the vehicle, to perform the foregoing parking braking process.

In some possible embodiments, after the second moment, when the vehicle is stationary, an automatic parking function of the vehicle may alternatively be enabled, and a parking operation is performed based on the third threshold. Optionally, the automatic parking function of the vehicle may be implemented by using an electrical parking braking (electrical parking braking, EPB) system, an automatic vehicle hold (autohold, AVH) system, or a P-lock (P-Lock) of the vehicle. Certainly, another manner may be used. This is not limited in this embodiment of this application.

S230: Determine a first execution braking force and a second execution braking force based on the target braking force.

The first execution braking force is provided through energy regeneration, and the second execution braking force is provided by the braking system.

Based on the foregoing technical solution, in a process in which the target braking force first increases and then decreases, the force that is generated by the vehicle suspension in the deceleration process and that can cause a nod/jerking of the vehicle can be gradually consumed, thereby effectively alleviating nod/jerking of the vehicle in the braking process. In addition, because the target braking force first increases and then decreases, a corresponding value of the vehicle braking deceleration is also first increased and then decreased. It can be learned from the change trend that, compared with a common braking manner in which a deceleration change is small, this solution can implement comfort braking without increasing the braking distance. In addition, an extra braking force is provided through energy regeneration, to share working load that is based on the braking system, thereby ensuring comfort braking.

In some possible embodiments, after the first execution braking force and the second execution braking force are determined, the braking system of the vehicle may be indicated, based on the first execution braking force and the second execution braking force, to perform a braking operation.

In some possible embodiments, a sum of the first execution braking force and the second execution braking force is equal to the target braking force.

In some possible embodiments, before the first moment, or when the vehicle speed is greater than or equal to the first vehicle speed, the second execution braking force is configured to be 0, and the first execution braking force is configured to be equal to the target braking force.

The first vehicle speed is a condition for braking through energy regeneration. For example, when the vehicle is at 30 kph, the vehicle can perform braking by using a back-towing braking force generated by an engine. In this case, the braking force provided through energy regeneration is sufficient to meet the target braking force. Therefore, the second execution braking force may be configured to be 0.

In some possible embodiments, when the vehicle speed is less than or equal to the second vehicle speed, or when the vehicle is incapable of performing energy regeneration braking, the first execution braking force is configured to be 0, and the second execution braking force is configured to be equal to the target braking force.

For ease of description, the following specifically describes a change relationship between the first execution braking force, the second execution braking force, and the target braking force separately with reference to FIG. 3(a), FIG. 3(b), and FIG. 3(c).

In some possible embodiments, in FIG. 3(a) to FIG. 3(c), a first execution braking force curve is a change curve of the braking force provided through energy regeneration, and a second execution braking force curve is a change curve of the braking force provided by the braking system.

As shown in FIG. 3(a), at the first moment, the braking force provided through energy regeneration can meet a requirement of the target braking force. Therefore, the braking force does not need to be provided by the braking system at the moment.

Between the first moment and the second moment, the braking force provided through energy regeneration gradually decreases, and the requirement of the target braking force cannot be met. Therefore, in this time period, the braking system needs to be used to supplement the braking force, so that the sum of the first execution braking force and the second execution braking force is equal to the target braking force.

At a moment before the second moment, the braking force cannot be provided through energy regeneration. After the moment, the braking force can be provided only by the braking system, to meet the requirement of the target braking force. Therefore, after the moment, a change trend of the second execution braking force curve is consistent with a change trend of the preset curve information.

As shown in FIG. 3(b), between the first moment and the second moment, because the braking force that initially provided through energy regeneration is sufficient to meet the requirement of the target braking force, the braking force does not need to be provided by the braking system in the initial time period. However, after the initial time period, because the braking force provided through energy regeneration gradually decreases, the requirement of the target braking force cannot be met at a moment. Therefore, after the moment, the braking system needs to be used to supplement the braking force, so that the sum of the first execution braking force and the second execution braking force is equal to the target braking force.

At a previous moment close to the second moment, the braking force cannot be provided through energy regeneration. After the moment, the braking force can be provided only by the braking system, to meet the requirement of the target braking force. Therefore, after the moment, a change trend of the second execution braking force curve is consistent with a change trend of the preset curve information.

As shown in FIG. 3(c), from the first moment, the braking force provided through energy regeneration is always 0. For example, the vehicle speed of the vehicle is always less than the first speed, that is, the braking force cannot be provided through energy regeneration. Therefore, during braking of the vehicle, the braking force is provided by the braking system, and the braking force is always equal to the target braking force. Therefore, in the whole comfort braking process, FIG. 3(c) has only the second execution braking force curve.

Based on the foregoing technical solution, comfort braking can be implemented, to avoid nod/jerking of the vehicle in the braking process, and improve comfortability of the braking process while avoiding a collision risk and not additionally increasing the braking distance. **In** addition, an extra braking force is provided through energy regeneration, to share working load of the vehicle braking system, thereby ensuring comfort braking.

In some possible embodiments, the target braking force may be determined based on information about a correspondence between the vehicle speed, the required braking force, and the target braking force.

The information about the correspondence includes a first dataset, and the first dataset includes preset curve information or preset correspondence table information of the target braking force at the first moment to the second moment.

Based on the foregoing technical solution, the change trend of the target braking force can be more intuitively presented by using the preset curve information or the preset correspondence table information, so that a visualized change trend of a second required braking force is provided for the user.

In some possible embodiments, the preset curve information is a curve of the target braking forces that are determined at the plurality of moments during braking of the vehicle, and the preset correspondence table information records a correspondence of the target braking forces that respectively correspond to the plurality of moments during braking of the vehicle.

Based on the foregoing technical solution, historically confirmed target braking forces at the plurality of moments directly continue to be used, thereby reducing calculation costs of comfort braking, and increasing calculation efficiency of comfort braking.

To start the comfort braking process, it is further required to determine whether the vehicle currently meets a specified precondition. If the vehicle meets the precondition, the comfort braking process may be started.

In some possible embodiments, before S220, whether the vehicle currently meets a first condition may be further determined. The first condition includes at least one of the following: the vehicle braking deceleration is within a first preset interval, the vehicle speed is lower than a preset speed, the distance between the vehicle and the obstacle is greater than or equal to a preset distance, a pedal stroke of the vehicle is within a second preset interval, or a pedal stroke change rate of the vehicle is within a third preset interval.

For example, the first preset interval may be [0,15] m/s², or may be another appropriate deceleration interval.

The preset speed may be 50 kph, or may be another appropriate preset speed value.

The preset distance may be 150 m, or may be another appropriate preset distance value. The second preset interval may be [0,10] cm, or may be another appropriate preset interval. The third preset interval may be [0,5] cm/s, or may be another appropriate preset interval.

In some possible embodiments, a value corresponding to the deceleration mentioned in this embodiment of this application is a scalar value.

In some possible embodiments, in addition to the foregoing information, information included in the first condition may further include the following: a height of a front shaft suspension of the vehicle is lower than a height of a rear shaft suspension of the vehicle, a traffic signal light ahead of the vehicle is a red light, there is a sidewalk ahead of the vehicle, or the like. An active suspension four-wheel height is heights of active suspensions on four wheels from the ground.

In some possible embodiments, the first preset interval, the second preset interval, the third preset interval, the preset distance, and the preset speed may be set for different vehicles and different traveling environments.

Based on the foregoing technical solution, due to particularity of comfort braking, comfort braking can be completed only on a specific premise, to avoid a corresponding safety risk caused by still using comfort braking in an emergency case, and improve safety of comfort braking.

In some possible embodiments, when the vehicle performs comfort braking, for example, during braking of the vehicle, the vehicle further needs to determine whether the vehicle in this time period still meets the first condition. If the vehicle does not meet the first condition at a moment, it may mean that a current driving environment of the vehicle suddenly changes. For example, when another target suddenly appears ahead of the vehicle, or an emergency occurs in a cab, to ensure safety of the user, a passenger, and the another target on the road, a comfort braking operation needs to be stopped, and braking permission is completely handed over to the user. Certainly, even if another target suddenly appears ahead of the vehicle, the vehicle still meets the first condition, which indicates that a current traveling environment is still good. In this case, a comfort braking operation does not need to be stopped, and only the target braking force needs to be re-determined or the preset curve information needs to be re-planned.

Based on the foregoing technical solution, during comfort braking, if the traveling environment of the vehicle changes, whether the vehicle meets the first condition is re-determined, and when the vehicle meets the first condition, the target braking force is re-planned, to avoid a case in which in an emergency during comfort braking, a traffic accident is caused by inability to make emergency avoidance due to comfort braking execution. This further increases safety of comfort braking.

In some possible embodiments, the braking system includes a hydraulic braking system, an EPB, and an electro-mechanical braking (electro-mechanical braking, EMB) system.

Based on the foregoing technical solution, the method can be applied to a plurality of braking systems, and has strong applicability and compatibility.

In some possible embodiments, a comfort braking function of the vehicle may be automatically enabled after the vehicle is powered on, or may be enabled by using a specified comfort braking function enabling instruction after the vehicle is powered on.

In some possible embodiments, after the vehicle is powered on, an on/off state of a comfort braking function present after the vehicle is powered on last time is obtained. If the comfort braking function present after the vehicle is powered on last time is enabled, it indicates that a current comfort braking function of the vehicle can be enabled. If the comfort braking function present after the vehicle is powered on last time is disabled, prompt information may be sent to the user, where the prompt information is used to inform the user whether to enable the comfort braking function of the vehicle. When a start instruction of the user is detected, the comfort braking function of the vehicle is enabled.

In some possible embodiments, the prompt information may be voice prompt information, or may be text prompt information, video prompt information, or prompt information in another form. This is not limited in this embodiment of this application.

In some possible embodiments, the start instruction may be an operation instruction of the user for a physical control button on a center console of the vehicle, or may be a touch instruction of the user for a virtual button on a display of a center console of the vehicle, or may be a voice instruction, a gesture instruction, or another instruction. This is not limited in this embodiment of this application.

In some possible embodiments, the on/off state of the comfort braking function present after the vehicle is powered on last time is availability of the comfort braking function determined during startup of the vehicle last time.

In some possible embodiments, after the vehicle is powered on, whether the vehicle and a system are available may be further detected. When it is determined that the vehicle and the system are available, the foregoing obtaining the on/off state of the comfort braking function present after the vehicle is powered on last time and subsequent operations are performed. When it is determined that the vehicle and the system are unavailable, it indicates that the comfort braking function is unavailable.

In some possible embodiments, detecting whether the vehicle and the system are available may be specifically detecting whether there is a factor that affects comfort braking of the vehicle, for example, a braking pedal is damaged or a braking main cylinder is broken.

In some possible embodiments, in the comfort braking process, the vehicle may be in an over-braking (over-braking) state or an under-braking (under-braking) state. When the vehicle is in the over-braking state or the under-braking state, comfort is affected, and even driving safety is affected. Therefore, in the comfort braking process, it is also necessary to monitor in real time whether the vehicle is under-braking or over-braking. If it is determined that the vehicle is in the under-braking state or the over-braking state, comfort braking is exited, and common braking is performed, or the target braking force is re-determined, for example, a second target braking force is determined, and the vehicle is controlled, based on the second target braking force, to perform braking.

The following uses a hydraulic braking system as an example. Specifically, whether the vehicle is in the under-braking state or the over-braking state may be determined in the following manner:
A comfort braking time of the vehicle is greater than a preset time;
a difference between a first braking distance and a second braking distance is greater than a first distance threshold, or a difference between a third braking distance and a first braking distance is less than a second distance threshold, where the first braking distance is obtained through calculation based on target braking torque and the vehicle speed, the second braking distance is obtained through calculation based on the required braking force and the vehicle speed, and the third braking distance is the distance between the vehicle and the obstacle; or
a variation of the deceleration of the vehicle in the comfort braking process is greater than a first deceleration threshold.

For example, the preset time may be 20s, or may be another appropriate preset time value.

The first distance threshold may be 150 m, or may be another appropriate threshold.

The second distance threshold may be 50 m, or may be another appropriate threshold.

The third distance threshold may be 100 m, or may be another appropriate threshold.

The first deceleration threshold may be 20 m/s², or may be another appropriate threshold.

In some possible embodiments, the comfort braking time of the vehicle is greater than the preset time. In other words, the braking force is insufficient, and consequently, a long time is consumed for braking. This case indicates that a braking force provided by the braking main cylinder of the vehicle and/or the braking force provided through energy regeneration are/is insufficient, and the vehicle is in the under-braking state.

In the comfort braking process, the difference between the first braking distance and the second braking distance is greater than the first distance threshold. In other words, the braking distance of the vehicle is excessively long because of an insufficient braking force, that is, a braking force provided by the braking main cylinder of the vehicle and/or the braking force provided through energy regeneration are/is insufficient. This case indicates that the vehicle is in the under-braking state.

In the comfort braking process, the difference between the third braking distance and the first braking distance is less than the second distance threshold. In other words, the braking distance of the vehicle is excessively long because of an insufficient braking force, that is, a braking force provided by the braking main cylinder of the vehicle and/or the braking force provided through energy regeneration are/is insufficient. This case indicates that the vehicle is in the under-braking state.

In the comfort braking process, the deceleration of the vehicle changes greatly because the braking force is excessively large, that is, a braking force provided by the braking main cylinder of the vehicle and/or the braking force provided through energy regeneration are/is excessively large. This case indicates that the vehicle is in the over-braking state.

For a non-decoupled braking system, a motor is controlled, through controlling a solenoid valve or in a pressure-based closed-loop manner, to extract a part of braking fluid from or press a part of braking fluid into the braking main cylinder of the vehicle, to cooperate with the braking force provided through energy regeneration, thereby reducing or increasing pressure of the braking main cylinder of the vehicle. For a decoupled braking system, a motor is controlled through controlling a solenoid valve or in a pressure-based closed-loop manner, so that a pressure unit adjusts pressure of the braking main cylinder of the vehicle based on a preset pressure curve. In this manner, pressure adjustment is more stable and noise is small. In addition, the braking force is provided through energy regeneration, and a part of braking force is shared, thereby reducing working load of the braking system.

The braking system shown in FIG. 1 is used as an example. In the braking implementation process, the user steps on the braking pedal 101, the push rod mechanism of the integrated booster 102 generates the displacement, the pedal stroke sensor detects the displacement of the push rod mechanism, and sends the displacement signal to the ECU, the ECU calculates the torque that should be generated by the motor, the torque corresponds to the required braking force input by the user, and then the transmission mechanism of the motor converts the torque into the braking force. The ECU calculates pressure of the braking main cylinder present when the braking force and a push rod force that is generated by the braking pedal 101 by using the push rod mechanism act on the braking main cylinder, where the pressure is the foregoing required pressure. The ECU controls, based on the required pressure and in the foregoing control manner, a braking force of the braking main cylinder to change based on a braking force corresponding to the preset curve information and the braking force provided through energy regeneration. In this process, the braking force corresponding to the preset curve information and the braking force provided through energy regeneration are jointly converted into hydraulic pressure in the braking main cylinder, and braking fluid with the hydraulic pressure acts on the braking actuators (103-1, 103-2, 103-3, and 103-4) through the braking fluid pipe 104, to implement comfort braking.

With reference to the foregoing embodiment of determining whether the vehicle is in the under-braking state or the over-braking state, an embodiment of this application provides another braking control method.

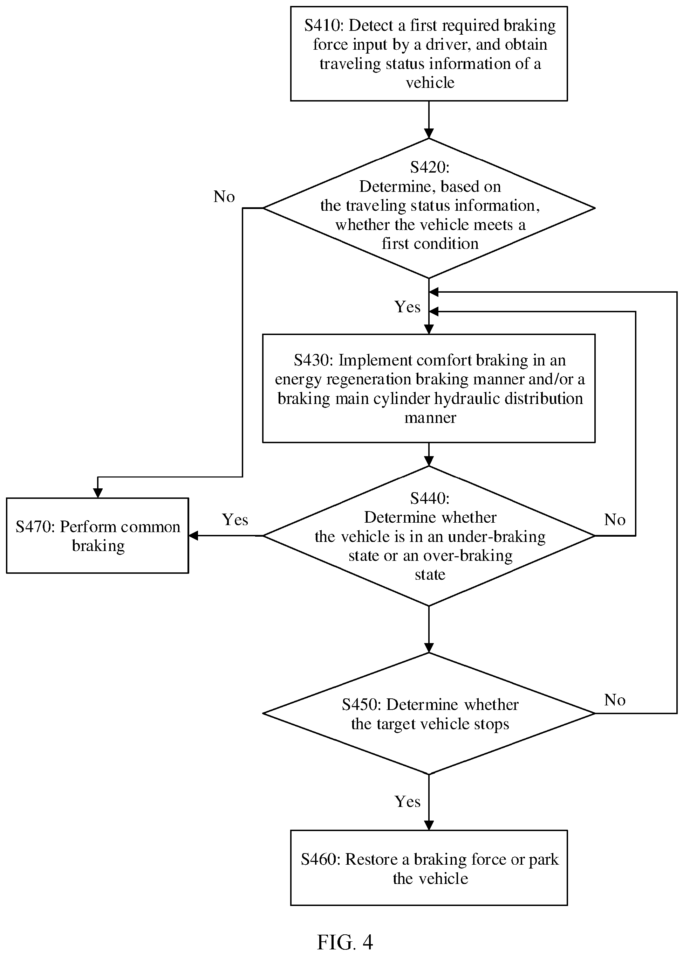

FIG. 4 is a schematic flowchart of another braking control method according to an embodiment of this application.

S410: Detect a required braking force input by a user, and obtain traveling status information of a vehicle.

The traveling status information of the vehicle may include a vehicle speed, a braking force input into the entire vehicle, a pedal moving speed, and the like.

S420: Determine, based on the traveling status information, whether the vehicle meets a first condition.

If it is determined that the vehicle meets the first condition, the vehicle needs to perform a comfort braking operation, and step S430 is performed; otherwise, step S470 is performed.

In some possible embodiments, for specific content of the traveling status information of the vehicle and determining, based on the traveling status information, whether to perform comfort braking, refer to related descriptions in the foregoing embodiments. Details are not described herein again.

S430: Implement comfort braking in an energy regeneration braking manner and/or a braking main cylinder hydraulic distribution manner.

In some possible embodiments, a braking force of a braking main cylinder of the vehicle is adjusted based on the preset curve information and braking forces provided through energy regeneration at the plurality of moments in the embodiment shown in FIG. 3(a) to FIG. 3(c). For a specific implementation process, refer to related descriptions in the foregoing embodiments.

S440: Determine whether the vehicle is in an under-braking state or an over-braking state.

In some possible embodiments, in a comfort braking process, it is determined in real time whether the vehicle is in the under-braking state or the over-braking state. For a specific determining method, refer to related descriptions in the foregoing embodiments. Details are not described herein again. When the vehicle is neither in the under-braking state nor in the over-braking state, step S430 continues to be performed; or when the vehicle is in the under-braking state or the over-braking state, step S470 is performed.

S450: Determine whether the vehicle stops.

In some possible embodiments, whether the vehicle stops is determined based on traveling information of the vehicle. The traveling information may be the speed of the vehicle, or certainly may be other information. This is not limited herein. After the vehicle stops, step S460 is performed; or when the vehicle does not stop, step S430 continues to be performed.

S460: Restore the braking force or park the vehicle.

In some possible embodiments, in a process of performing comfort braking based on the preset curve information, when the vehicle is stationary, the braking force provided through energy regeneration is limited, or braking cannot be performed through energy regeneration. In addition, in this case, the braking force of the braking main cylinder of the vehicle is small and is insufficient to keep the vehicle stationary. Therefore, when the vehicle is stationary, pressure of the braking main cylinder of the vehicle is increased, to reach pressure required for keeping the vehicle stationary, and when the pressure of the braking main cylinder of the vehicle reaches the pressure required for keeping the vehicle stationary, an automatic parking system of the vehicle is enabled. Alternatively, when the vehicle is stationary, an automatic parking system of the vehicle is enabled.

S470: Perform common braking.

In some possible embodiments, the common braking may be braking performed according to a conventional specified policy, or may be directly taken over by a driver or an intelligent driving system, to control the vehicle to perform a braking operation.

In some possible embodiments, when the vehicle is in the under-braking state or the over-braking state, if comfort braking continues, driving safety is affected. Therefore, when the vehicle is in the under-braking state or the over-braking state, the vehicle is controlled to exit comfort braking and perform common braking.

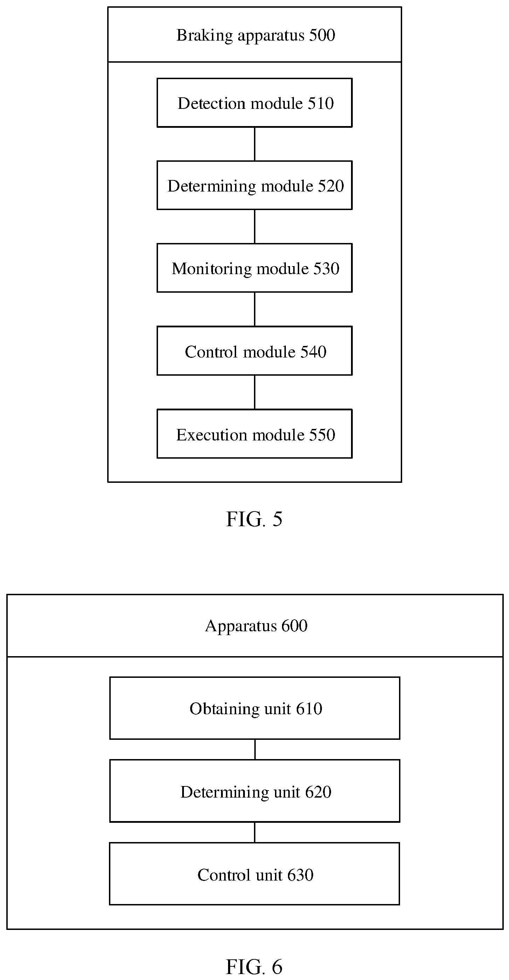

FIG. 5 is a diagram of a structure of a braking control apparatus 500 according to an embodiment of this application. As shown in FIG. 5, the braking control apparatus 500 includes the following.

A detection module 510 is configured to detect a required braking force input by a user and obtain traveling status information of a vehicle.

For specific content of the traveling status information, refer to related descriptions in the foregoing embodiments. Details are not described herein again.

In some possible embodiments, information stored in a braking ECU (a status of a comfort braking function last enabled), vehicle instrument or button input, user input information (an accelerator pedal, a braking pedal stroke, and the like), and real-time detection information from modules, for example, a vehicle sensor module (a wheel speed, a vehicle speed, an acceleration, and the like), a network connection module (surrounding vehicle information and the like), an environment sensing module (whether there is an obstacle, a distance from the obstacle, information about traffic lights and zebra crossings, and the like), and an associated ECU (an active suspension four-wheel height), may be collected, and fusion processing is performed, to obtain the traveling status information of the vehicle.

A determining module 520 is configured to: determine, based on the traveling status information of the vehicle, whether the vehicle meets a first condition, to determine whether the vehicle needs to perform a comfort braking operation.

For a specific determining process, refer to related content in the foregoing embodiments. Details are not described herein again.

A monitoring module 530 is configured to monitor, in real time based on data collected by the detection module 510 and an entire vehicle status of the vehicle, whether the vehicle is in an under-braking state or an over-braking state.

If the vehicle is equipped with an active suspension and has an external response interface, in an entire driving braking process, a control module 540 cooperates with energy regeneration braking and a braking system to achieve comfort braking effect. If the vehicle is equipped with an ordinary suspension and it is determined that comfort braking is required, braking pressure that needs to be provided for a specified braking unit of a braking system to perform adjustment based on preset curve information and a braking force that can be provided through energy regeneration may be different from braking pressure corresponding to the braking pedal stroke of the vehicle or braking pressure requested by an automatic braking system. After the vehicle is stationary, the specified braking pressure is restored to pressure that can keep the vehicle stationary, and is not necessarily pressure requested by an intelligent driving system or pressure corresponding to a braking pedal stroke of the user.

An execution module 550 is configured to adjust, based on the preset curve information, the braking force provided through energy regeneration and pressure of a vehicle braking main cylinder. A specific adjustment manner is not limited, and a decoupled braking system or a non-decoupled braking system may be used.

It should be noted herein that, for implementation processes of the detection module 510, the determining module 520, the monitoring module 530, the control module 540, and the execution module 550, refer to related descriptions in the foregoing embodiments. Details are not described herein again.

**In** addition, an embodiment of this application further provides an apparatus configured to implement any one of the foregoing methods. For example, a braking apparatus is provided. The apparatus includes a unit (or a means) configured to implement any one of the foregoing braking methods.

FIG. 6 is a block diagram of a braking control apparatus 600 according to an embodiment of this application. As shown in FIG. 6, the apparatus 600 includes:
an obtaining unit 610, configured to obtain a vehicle speed and a required braking force of a vehicle; and
a determining unit 620, configured to: determine a target braking force based on the vehicle speed and the required braking force, where at a first moment to a second moment, the target braking force first changes to a first threshold and then changes to a second threshold, the first threshold is greater than the required braking force, and the second threshold is less than the required braking force; the first moment is a moment at which the vehicle speed is equal to a first speed; and the second moment is a moment at which the vehicle speed is equal to a second speed, and the second speed is less than the first speed; and determine a first execution braking force and a second execution braking force based on the target braking force, where the first execution braking force is provided through energy regeneration, and the second execution braking force is provided by a braking system.

In some possible embodiments, after the second moment, the target braking force changes to a third threshold, and the third threshold is a braking force required for keeping the vehicle stationary.

In some possible embodiments, the apparatus 600 further includes a control unit 630, configured to control the vehicle to perform parking braking.

In some possible embodiments, a sum of the first execution braking force and the second execution braking force is equal to the target braking force.

In some possible embodiments, before the first moment, or when the vehicle speed is greater than or equal to the first vehicle speed, the second execution braking force is configured to be 0, and the first execution braking force is configured to be equal to the target braking force.

In some possible embodiments, when the vehicle speed is less than or equal to the second vehicle speed, or when the vehicle is incapable of performing energy regeneration braking, the first execution braking force is configured to be 0, and the second execution braking force is configured to be equal to the target braking force.

In some possible embodiments, the determining unit is specifically configured to determine the target braking force based on information about a correspondence between the vehicle speed, the required braking force, and the target braking force.

In some possible embodiments, the information about the correspondence includes a first dataset, and the first dataset includes preset curve information or preset correspondence table information of the target braking force at the first moment to the second moment.

In some possible embodiments, the determining unit 620 is further configured to: determine that the vehicle currently meets a first condition, where the first condition includes at least one of the following: a vehicle braking deceleration is within a first preset interval, the vehicle speed is lower than a preset speed, a distance between the vehicle and an obstacle is greater than or equal to a preset distance, a pedal stroke of the vehicle is within a second preset interval, or a pedal stroke change rate of the vehicle is within a third preset interval.

In some possible embodiments, the control unit 630 is further configured to: when a difference between a first braking distance and a second braking distance is greater than a first distance threshold, or when a difference between a third braking distance and the first braking distance is less than a second distance threshold, control, based on a second target braking force, the vehicle to perform braking, where the first braking distance is obtained through calculation based on target braking torque and the vehicle speed, the second braking distance is obtained through calculation based on the required braking force and the vehicle speed, and the third braking distance is the distance between the vehicle and the obstacle.

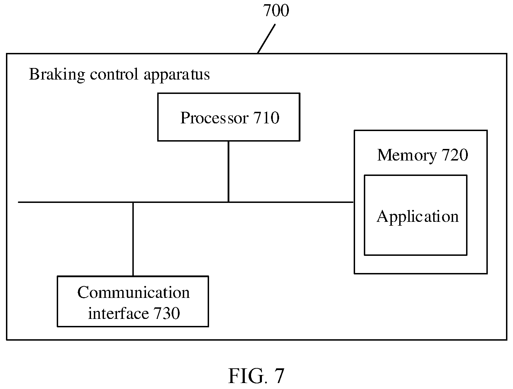

FIG. 7 is a diagram of a structure of a braking control apparatus 700 according to an embodiment of this application. The braking control apparatus 700 (the apparatus 700 may be specifically a computer device) shown in FIG. 7 includes a processor 710, a memory 720, and a communication interface 730. Communication connections between the processor 710, the memory 720, and the communication interface 730 are implemented through a bus.

The processor 710 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement a function that needs to be performed by a unit in the braking apparatus 600 in embodiments of this application, or perform the braking control method in the method embodiments of this application, or implement a function that needs to be performed by a module in the braking apparatus 600 in embodiments of this application.

The processor 710 may be an integrated circuit chip and has a signal processing capability. In an implementation process, steps of the braking control method in this application may be completed by using a hardware integrated logic circuit in the processor 710 or by using instructions in a form of software. The processor 710 may alternatively be a general-purpose processor, a digital signal processor (Digital Signal Processor, DSP), an application-specific integrated circuit (ASIC), a field programmable gate array (Field Programmable Gate Array, FPGA) or another programmable logical device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 720. The processor 710 reads information in the memory 720, and completes, in combination with hardware of the processor 710, functions that need to be performed by units included in the vehicle-mounted apparatus in embodiments of this application, or performs the comfort braking control communication method in the method embodiments of this application.

The memory 720 may be a read-only memory (Read-Only Memory, ROM), a static storage device, a dynamic storage device, or a random access memory (Random Access Memory, RAM). The memory 720 may store a program. When the program stored in the memory 720 is executed by the processor 710, the processor 710 and the communication interface 730 are configured to perform steps of the braking control method in embodiments of this application.

The communication interface 730 uses a transceiver apparatus, for example, but not limited to, a transceiver, to implement communication between the braking control apparatus 700 and another device or a communication network.

The bus may include a path for transmitting information between components (for example, the processor 710, the memory 720, and the communication interface 730) of the braking control apparatus 700.

It should be understood that the determining unit 620 in the braking apparatus 600 may be equivalent to the processor 710.

In some possible embodiments, although only the memory, the processor, and the communication interface are shown in the braking control apparatus 700 shown in FIG. 7, in a specific implementation process, a person skilled in the art should understand that the apparatus 700 further includes another component required for implementing normal running. In addition, according to a specific requirement, a person skilled in the art should understand that the apparatus 700 may further include hardware components for implementing other additional functions. In addition, a person skilled in the art should understand that the apparatus 700 may include only components necessary for implementing embodiments of this application, but does not need to include all components shown in FIG. 7.

An embodiment of this application further provides a computer storage medium. The computer storage medium may store a program. When the program is executed, some or all of the steps of any braking control method recorded in the foregoing method embodiments may be implemented. The foregoing storage medium includes any medium that can store program code, such as a USB flash drive, a read-only memory (English: read-only memory), a random access memory (English: random access memory, RAM), a removable hard disk, a magnetic disk, or an optical disc.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or a part contributing to a conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A braking control method, comprising:
obtaining (S210) a vehicle speed and a required braking force of a vehicle;
determining (S220) a target braking force based on the vehicle speed and the required braking force, wherein
at a first moment to a second moment, the target braking force first changes to a first threshold and then changes to a second threshold, the first threshold is greater than the required braking force, and the second threshold is less than the required braking force;
the first moment is a moment at which the vehicle speed is equal to a first speed; and
the second moment is a moment at which the vehicle speed is equal to a second speed, and the second speed is less than the first speed; and
determining (S230) a first execution braking force and a second execution braking force based on the target braking force, wherein the first execution braking force is provided through energy regeneration, and the second execution braking force is provided by a braking system.

2. The method according to claim 1, wherein after the second moment, the target braking force changes to a third threshold, and the third threshold is a braking force required for keeping the vehicle stationary.

3. The method according to claim 2, further comprising: controlling the vehicle to perform parking braking.

4. The method according to any one of claims 1 to 3, wherein a sum of the first execution braking force and the second execution braking force is equal to the target braking force.

5. The method according to any one of claims 1 to 4, wherein before the first moment or when the vehicle speed is greater than or equal to the first vehicle speed, the second execution braking force is configured to be 0, and the first execution braking force is configured to be equal to the target braking force.

6. The method according to any one of claims 1 to 5, further comprising:
when the vehicle speed is less than or equal to the second vehicle speed, or when the vehicle is incapable of performing energy regeneration braking, the first execution braking force is configured to be 0, and the second execution braking force is configured to be equal to the target braking force.

7. The method according to any one of claims 1 to 6, wherein the determining a target braking force based on the vehicle speed and the required braking force comprises:
determining the target braking force based on information about a correspondence between the vehicle speed, the required braking force, and the target braking force.

8. A braking control apparatus (600), comprising:
an obtaining unit (610), configured to obtain a vehicle speed and a required braking force of a vehicle; and
a determining unit (620), configured to: determine a target braking force based on the vehicle speed and the required braking force, wherein at a first moment to a second moment, the target braking force first changes to a first threshold and then changes to a second threshold, the first threshold is greater than the required braking force, and the second threshold is equal to the required braking force; the first moment is a moment at which the vehicle speed is equal to a first speed; and the second moment is a moment at which the vehicle speed is equal to a second speed, and the second speed is less than the first speed; and determine a first execution braking force and a second execution braking force based on the target braking force, wherein the first execution braking force is provided through energy regeneration, and the second execution braking force is provided by a braking system.

9. The apparatus according to claim 8, wherein after the second moment, the target braking force changes to a third threshold, and the third threshold is a braking force required for keeping the vehicle stationary.

10. The apparatus according to claim 8 or 9, wherein the apparatus further comprises:
a control unit (630), configured to control the vehicle to perform parking braking.

11. The apparatus according to any one of claims 8 to 10, wherein a sum of the first execution braking force and the second execution braking force is equal to the target braking force.

12. The apparatus according to any one of claims 8 to 11, wherein before the first moment or when the vehicle speed is greater than or equal to the first vehicle speed, the second execution braking force is configured to be 0, and the first execution braking force is configured to be equal to the target braking force.

13. The apparatus according to any one of claims 8 to 12, wherein when the vehicle speed is less than or equal to the second vehicle speed, or when the vehicle is incapable of performing energy regeneration braking, the first execution braking force is configured to be 0, and the second execution braking force is configured to be equal to the target braking force.

14. The apparatus according to any one of claims 8 to 13, wherein the determining unit is specifically configured to:
determine the target braking force based on information about a correspondence between the vehicle speed, the required braking force, and the target braking force.

15. A computer-readable storage medium, wherein the computer-readable storage medium stores a computer program, and the computer program is executed by a processor, to implement the braking control method according to any one of claims 1 to 7.

## Patentansprüche

1. Bremssteuerungsverfahren, umfassend:
Erfassen (S210) einer Fahrzeuggeschwindigkeit und einer erforderlichen Bremskraft eines Fahrzeugs;
Bestimmen (S220) einer Sollbremskraft basierend auf der Fahrzeuggeschwindigkeit und der erforderlichen Bremskraft, wobei
sich die Sollbremskraft von einem ersten Zeitpunkt zu einem zweiten Zeitpunkt zunächst auf einen ersten Schwellenwert ändert und dann auf einen zweiten Schwellenwert ändert, wobei der erste Schwellenwert größer als die erforderliche Bremskraft ist und der zweite Schwellenwert kleiner als die erforderliche Bremskraft ist;
der erste Zeitpunkt ein Zeitpunkt ist, zu dem die Fahrzeuggeschwindigkeit gleich einer ersten Geschwindigkeit ist; und
der zweite Zeitpunkt ein Zeitpunkt ist, zu dem die Fahrzeuggeschwindigkeit gleich einer zweiten Geschwindigkeit ist, wobei die zweite Geschwindigkeit kleiner als die erste Geschwindigkeit ist; und
Bestimmen (S230) einer ersten Ausführungsbremskraft und einer zweiten Ausführungsbremskraft basierend auf der Sollbremskraft, wobei die erste Ausführungsbremskraft durch Energierückgewinnung bereitgestellt wird und die zweite Ausführungsbremskraft durch ein Bremssystem bereitgestellt wird.

2. Verfahren nach Anspruch 1, wobei sich die Sollbremskraft nach dem zweiten Zeitpunkt auf einen dritten Schwellenwert ändert und der dritte Schwellenwert eine Bremskraft ist, die erforderlich ist, um das Fahrzeug im Stillstand zu halten.

3. Verfahren nach Anspruch 2, ferner umfassend: Steuern des Fahrzeugs, um eine Parkbremsung durchzuführen.

4. Verfahren nach einem der Ansprüche 1 bis 3, wobei eine Summe der ersten Ausführungsbremskraft und der zweiten Ausführungsbremskraft gleich der Sollbremskraft ist.

5. Verfahren nach einem der Ansprüche 1 bis 4, wobei vor dem ersten Zeitpunkt oder wenn die Fahrzeuggeschwindigkeit größer oder gleich der ersten Fahrzeuggeschwindigkeit ist, die zweite Ausführungsbremskraft dazu konfiguriert ist, 0 zu sein, und die erste Ausführungsbremskraft dazu konfiguriert ist, gleich der Sollbremskraft zu sein.

6. Verfahren nach einem der Ansprüche 1 bis 5, ferner umfassend:
wenn die Fahrzeuggeschwindigkeit kleiner oder gleich der zweiten Fahrzeuggeschwindigkeit ist oder wenn das Fahrzeug nicht in der Lage ist, Energierückgewinnungsbremsen durchzuführen, ist die erste Bremskraft dazu konfiguriert, 0 zu sein, und die zweite Ausführungsbremskraft ist dazu konfiguriert, gleich der Sollbremskraft zu sein.

7. Verfahren nach einem der Ansprüche 1 bis 6, wobei das Bestimmen einer Sollbremskraft basierend auf der Fahrzeuggeschwindigkeit und der erforderlichen Bremskraft Folgendes umfasst:
Bestimmen der Sollbremskraft basierend auf Informationen über einen Zusammenhang zwischen der Fahrzeuggeschwindigkeit, der erforderlichen Bremskraft und der Sollbremskraft.

8. Bremssteuerungsvorrichtung (600), umfassend:
eine Erfassungseinheit (610), die dazu konfiguriert ist, eine Fahrzeuggeschwindigkeit und eine erforderliche Bremskraft eines Fahrzeugs zu erfassen; und
eine Bestimmungseinheit (620), die zu Folgendem konfiguriert ist: Bestimmen einer Sollbremskraft basierend auf der Fahrzeuggeschwindigkeit und der erforderlichen Bremskraft,
wobei sich die Sollbremskraft von einem ersten Zeitpunkt zu einem zweiten Zeitpunkt zunächst auf einen ersten Schwellenwert ändert und dann auf einen zweiten Schwellenwert ändert, wobei der erste Schwellenwert größer als die erforderliche Bremskraft ist und der zweite Schwellenwert gleich der erforderlichen Bremskraft ist; wobei der erste Zeitpunkt ein Zeitpunkt ist, zu dem die Fahrzeuggeschwindigkeit gleich einer ersten Geschwindigkeit ist; und der zweite Zeitpunkt ein Zeitpunkt ist,
zu dem die Fahrzeuggeschwindigkeit gleich einer zweiten Geschwindigkeit ist, wobei die zweite Geschwindigkeit kleiner als die erste Geschwindigkeit ist; und Bestimmen einer ersten Ausführungsbremskraft und einer zweiten Ausführungsbremskraft basierend auf der Sollbremskraft, wobei die erste Ausführungsbremskraft durch Energierückgewinnung bereitgestellt wird und die zweite Ausführungsbremskraft durch ein Bremssystem bereitgestellt wird.

9. Vorrichtung nach Anspruch 8, wobei sich die Sollbremskraft nach dem zweiten Zeitpunkt auf einen dritten Schwellenwert ändert und der dritte Schwellenwert eine Bremskraft ist, die erforderlich ist, um das Fahrzeug im Stillstand zu halten.

10. Vorrichtung nach Anspruch 8 oder 9, wobei die Vorrichtung ferner Folgendes umfasst:
eine Steuereinheit (630), die dazu konfiguriert ist, das Fahrzeug so zu steuern, dass es eine Parkbremsung durchführt.

11. Vorrichtung nach einem der Ansprüche 8 bis 10, wobei eine Summe der ersten Ausführungsbremskraft und der zweiten Ausführungsbremskraft gleich der Sollbremskraft ist.

12. Vorrichtung nach einem der Ansprüche 8 bis 11, wobei vor dem ersten Zeitpunkt oder wenn die Fahrzeuggeschwindigkeit größer oder gleich der ersten Fahrzeuggeschwindigkeit ist, die zweite Ausführungsbremskraft dazu konfiguriert ist, 0 zu sein, und die erste Ausführungsbremskraft dazu konfiguriert ist, gleich der Sollbremskraft zu sein.

13. Vorrichtung nach einem der Ansprüche 8 bis 12, wobei, wenn die Fahrzeuggeschwindigkeit kleiner oder gleich der zweiten Fahrzeuggeschwindigkeit ist oder wenn das Fahrzeug nicht in der Lage ist, Energierückgewinnungsbremsen durchzuführen, die erste Bremskraft dazu konfiguriert ist, 0 zu sein, und die zweite Ausführungsbremskraft dazu konfiguriert ist, gleich der Sollbremskraft zu sein.

14. Vorrichtung nach einem der Ansprüche 8 bis 13, wobei die Bestimmungseinheit insbesondere zu Folgendem konfiguriert ist:
Bestimmen der Sollbremskraft basierend auf Informationen über einen Zusammenhang zwischen der Fahrzeuggeschwindigkeit, der erforderlichen Bremskraft und der Sollbremskraft.

15. Computerlesbares Speichermedium, wobei das computerlesbare Speichermedium ein Computerprogramm speichert und das Computerprogramm durch einen Prozessor ausgeführt wird, um das Bremssteuerungsverfahren nach einem der Ansprüche 1 bis 7 umzusetzen.

## Revendications

1. Procédé de commande de freinage, comprenant :
l'obtention (S210) d'une vitesse de véhicule et d'une force de freinage requise d'un véhicule ;
la détermination (S220) d'une force de freinage cible sur la base de la vitesse de véhicule et de la force de freinage requise, dans lequel
entre un premier instant et un second instant, la force de freinage cible passe d'abord à un premier seuil, puis passe à un deuxième seuil, le premier seuil est supérieur à la force de freinage requise, et le deuxième seuil est inférieur à la force de freinage requise ;
le premier instant est un instant auquel la vitesse de véhicule est égale à une première vitesse ; et
le second instant est un instant auquel la vitesse de véhicule est égale à une seconde vitesse, et la seconde vitesse est inférieure à la première vitesse ; et
la détermination (S230) d'une première force de freinage d'exécution et d'une seconde force de freinage d'exécution sur la base de la force de freinage cible, dans lequel la première force de freinage d'exécution est fournie par la régénération d'énergie et la seconde force de freinage d'exécution est fournie par un système de freinage.

2. Procédé selon la revendication 1, dans lequel après le second instant, la force de freinage cible passe à un troisième seuil, et le troisième seuil est une force de freinage requise pour maintenir le véhicule immobile.

3. Procédé selon la revendication 2, comprenant en outre : la commande du véhicule pour réaliser un freinage de stationnement.

4. Procédé selon l'une quelconque des revendications 1 à 3, dans lequel une somme de la première force de freinage d'exécution et de la seconde force de freinage d'exécution est égale à la force de freinage cible.

5. Procédé selon l'une quelconque des revendications 1 à 4, dans lequel avant le premier instant ou lorsque la vitesse de véhicule est supérieure ou égale à la première vitesse de véhicule, la seconde force de freinage d'exécution est configurée pour être à 0, et la première force de freinage d'exécution est configurée pour être égale à la force de freinage cible.

6. Procédé selon l'une quelconque des revendications 1 à 5, comprenant en outre :
lorsque la vitesse de véhicule est inférieure ou égale à la seconde vitesse de véhicule, ou lorsque le véhicule est incapable de réaliser un freinage de récupération d'énergie, la première force de freinage d'exécution est configurée pour être à 0, et la seconde force de freinage d'exécution est configurée pour être égale à la force de freinage cible.

7. Procédé selon l'une quelconque des revendications 1 à 6, dans lequel la détermination d'une force de freinage cible sur la base de la vitesse de véhicule et de la force de freinage requise comprend :
la détermination de la force de freinage cible sur la base d'informations concernant une correspondance entre la vitesse de véhicule, la force de freinage requise et la force de freinage cible.

8. Appareil de commande de freinage (600), comprenant :
une unité d'obtention (610), configurée pour obtenir une vitesse de véhicule et une force de freinage requise d'un véhicule ; et une unité de détermination (620), configurée pour : déterminer une force de freinage cible sur la base de la vitesse de véhicule et de la force de freinage requise, dans lequel entre un premier instant et un second instant, la force de freinage cible passe d'abord à un premier seuil, puis passe à un deuxième seuil, le premier seuil est supérieur à la force de freinage requise, et le deuxième seuil est égal à la force de freinage requise ; le premier instant est un instant auquel la vitesse de véhicule est égale à une première vitesse ; et le second instant est un instant auquel la vitesse de véhicule est égale à une seconde vitesse, et la seconde vitesse est inférieure à la première vitesse ; et déterminer une première force de freinage d'exécution et une seconde force de freinage d'exécution sur la base de la force de freinage cible, dans lequel la première force de freinage d'exécution est fournie par la régénération d'énergie et la seconde force de freinage d'exécution est fournie par un système de freinage.

9. Appareil selon la revendication 8, dans lequel après le second instant, la force de freinage cible passe à un troisième seuil, et le troisième seuil est une force de freinage requise pour maintenir le véhicule immobile.

10. Appareil selon la revendication 8 ou 9, dans lequel l'appareil comprend en outre :
une unité de commande (630), configurée pour commander le véhicule pour réaliser le freinage de stationnement.

11. Appareil selon l'une quelconque des revendications 8 à 10, dans lequel une somme de la première force de freinage d'exécution et de la seconde force de freinage d'exécution est égale à la force de freinage cible.

12. Appareil selon l'une quelconque des revendications 8 à 11, dans lequel avant le premier instant ou lorsque la vitesse de véhicule est supérieure ou égale à la première vitesse de véhicule, la seconde force de freinage d'exécution est configurée pour être à 0, et la première force de freinage d'exécution est configurée pour être égale à la force de freinage cible.

13. Appareil selon l'une quelconque des revendications 8 à 12, dans lequel lorsque la vitesse de véhicule est inférieure ou égale à la seconde vitesse de véhicule, ou lorsque le véhicule est incapable de réaliser un freinage de récupération d'énergie, la première force de freinage d'exécution est configurée pour être à 0, et la seconde force de freinage d'exécution est configurée pour être égale à la force de freinage cible.

14. Appareil selon l'une quelconque des revendications 8 à 13, dans lequel l'unité de détermination est spécifiquement configurée pour :
déterminer la force de freinage cible sur la base d'informations concernant une correspondance entre la vitesse de véhicule, la force de freinage requise et la force de freinage cible.

15. Support de stockage lisible par ordinateur, dans lequel le support de stockage lisible par ordinateur stocke un programme informatique, et le programme informatique est exécuté par un processeur, pour mettre en œuvre le procédé de commande de freinage selon l'une quelconque des revendications 1 à 7.
